(19) Europäisches Patentamt
European Patent Office
Office européen des brevets

(11) **EP 3 030 586 B1**

(12) **FASCICULE DE BREVET EUROPEEN**

(45) Date de publication et mention de la délivrance du brevet:
**13.12.2017 Bulletin 2017/50**

(21) Numéro de dépôt: **14747030.6**

(22) Date de dépôt: **04.08.2014**

(51) Int Cl.:
**C08C 19/22** (2006.01)  **B60C 1/00** (2006.01)
**C08C 19/25** (2006.01)  **C08C 19/44** (2006.01)
**C08L 15/00** (2006.01)

(86) Numéro de dépôt international:
**PCT/EP2014/066676**

(87) Numéro de publication internationale:
**WO 2015/018774 (12.02.2015 Gazette 2015/06)**

(54) **ELASTOMÈRE DIÉNIQUE COUPLÉ POSSÉDANT UNE FONCTION SILANOL EN MILIEU DE CHAÎNE ET FONCTIONNALISÉ AMINE EN EXTRÉMITÉ DE CHAÎNE ET COMPOSITION DE CAOUTCHOUC LE COMPRENANT**

GEKOPPELTES DIENELASTOMER MIT SILANOLFUNKTION IN DER MITTE DER KETTE UND MIT EINER AMINFUNKTION AM KETTENENDE SOWIE KAUTSCHUKZUSAMMENSETZUNG DAMIT

COUPLED DIENE ELASTOMER HAVING A SILANOL FUNCTION IN THE MIDDLE OF THE CHAIN AND HAVING AN AMINE FUNCTION AT THE CHAIN END, AND RUBBER COMPOSITION COMPRISING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.08.2013 FR 1357909**

(43) Date de publication de la demande:
**15.06.2016 Bulletin 2016/24**

(73) Titulaire: **Compagnie Générale des Etablissements Michelin**
**63000 Clermont-Ferrand (FR)**

(72) Inventeurs:
• **DIRE, Charlotte**
**F-63040 Clermont-Ferrand Cedex 09 (FR)**
• **MARECHAL, Jean-Marc**
**F-63040 Clermont-Ferrand Cedex 09 (FR)**
• **SEEBOTH, Nicolas**
**F-63040 Clermont-Ferrand Cedex 09 (FR)**

(74) Mandataire: **Le Cam, Véronique Marie Christine**
**M.F.P. Michelin,**
**SGD/LG/PI,**
**F35,**
**Ladoux**
**63040 Clermont-Ferrand-Cedex 9 (FR)**

(56) Documents cités:
**FR-A1- 2 915 902    FR-A1- 2 930 554**
**FR-A1- 2 940 294**

• **DATABASE WPI Week 200673 Thomson Scientific, London, GB; AN 2006-700935 XP002723150, -& JP 2006 257260 A (SUMITOMO CHEM CO LTD) 28 septembre 2006 (2006-09-28)**
• **ZELINSKI R P ET AL: "Synthesis of trichain and tetrachain radial polybutadienes", JOURNAL OF POLYMER SCIENCE PART A: POLYMER CHEMISTRY, vol. 3, no. 1, 1 janvier 1965 (1965-01-01) , pages 93-103, XP008086967, JOHN WILEY & SONS, INC, US ISSN: 0887-624X**

**Description**

L'invention se rapporte à un élastomère diénique modifié comprenant majoritairement l'élastomère diénique fonctionnalisé en bout de chaîne par une fonction amine et couplé en milieu de chaîne par un groupe silanol. L'invention concerne également un procédé de préparation d'un tel élastomère diénique modifié, une composition le comprenant, ainsi qu'un article semi-fini et un pneumatique comprenant cette composition.

Depuis que les économies de carburant et la nécessité de préserver l'environnement sont devenues une priorité, il est souhaitable de produire des mélanges possédant de bonnes propriétés mécaniques, en particulier une bonne rigidité et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant l'aptitude à la mise en oeuvre, en particulier à cru, des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, ou bien l'utilisation d'amorceurs fonctionnels, le but étant d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante, il a été proposé d'utiliser des copolymères diéniques fonctionnalisés par des groupements silanol.

On peut citer les brevets FR 2 951 178 B1, FR 2 915 202 B1 et EP 778 311 B1 qui décrivent l'utilisation de polymères diéniques fonctionnalisés par un groupement silanol en extrémité de chaîne ou en milieu de chaîne pour diminuer l'hystérèse de compositions de caoutchouc renforcées à base notamment de charge inorganique renforçante. Dans le brevet FR 2 915 202 B1 en particulier, il est mentionné que la fonctionnalisation en milieu de chaîne permet d'améliorer la mise en oeuvre à cru comparativement à une fonctionnalisation en extrémité de chaîne. Plus récemment, la demande de brevet WO2009077837A1 décrit des élastomères fonctionnalisés par un groupement silanol à une extrémité de chaîne et par un groupement aminé à l'autre extrémité de chaîne. Ces élastomères sont également décrits comme pouvant être associés à des élastomères étoilés, en particulier par du silicium ou de l'étain. Les associations illustrées conduisent toutefois à une composition de caoutchouc renforcée dont le compromis mise en oeuvre / hystérèse n'est pas satisfaisant pour une application en pneumatique.

Il s'avère en effet que les compositions décrites dans l'art antérieur ne présentent pas toujours une hystérèse satisfaisante, une mise en oeuvre acceptable et des propriétés mécaniques satisfaisantes pour une utilisation en bande de roulement.

C'est la raison pour laquelle des recherches ont été menées sur d'autres réactions de fonctionnalisation, en vue de l'obtention de compositions de caoutchouc possédant un compromis mise en oeuvre à cru / hystérèse / rigidité amélioré.

Le but de la présente invention est donc de proposer une telle composition. Notamment, un objectif est de proposer un élastomère fonctionnalisé interagissant de manière satisfaisante avec la charge renforçante d'une composition de caoutchouc le contenant afin d'en diminuer l'hystérèse, tout en conservant une mise en oeuvre à cru acceptable et une rigidité satisfaisante, en vue notamment d'une utilisation en bande de roulement pour pneumatique.

Ce but est atteint en ce que les inventeurs viennent de découvrir de manière surprenante au cours de leurs recherches qu'un élastomère diénique modifié par couplage au moyen d'un agent porteur d'au moins une fonction silanol, et dont les deux extrémités de chaîne sont fonctionnalisées à au moins 70% par une fonction amine, confère aux compositions le contenant une amélioration remarquable et inattendue du compromis hystérèse / rigidité / mise en oeuvre à cru.

En effet, d'une part le compromis hystérèse / rigidité de telles compositions est amélioré par rapport à celui des compositions contenant des élastomères ne possédant pas de fonction amine en extrémité de chaîne, notamment par rapport à celui de compositions contenant des élastomères diéniques modifiés par couplage au moyen d'un agent porteur d'au moins une fonction silanol, mais ne possédant pas de fonction amine en extrémité de chaîne. D'autre part, la mise en oeuvre à cru de telles compositions est similaire à celle de compositions contenant des élastomères non fonctionnalisés et reste acceptable.

L'invention a donc pour objet un élastomère diénique modifié comprenant majoritairement l'espèce fonctionnalisée en milieu de chaîne par un groupe silanol dont l'atome de silicium lie les deux morceaux de la chaîne, les extrémités de chaîne de l'élastomère diénique modifié étant fonctionnalisées à au moins 70% molaire par rapport au nombre de moles de bout de chaîne, par une fonction amine.

L'invention a également pour objet un procédé de synthèse dudit élastomère diénique modifié.

Un autre objet de l'invention est une composition de caoutchouc renforcée à base au moins d'une charge renforçante et d'une matrice élastomère comprenant au moins ledit élastomère diénique modifié.

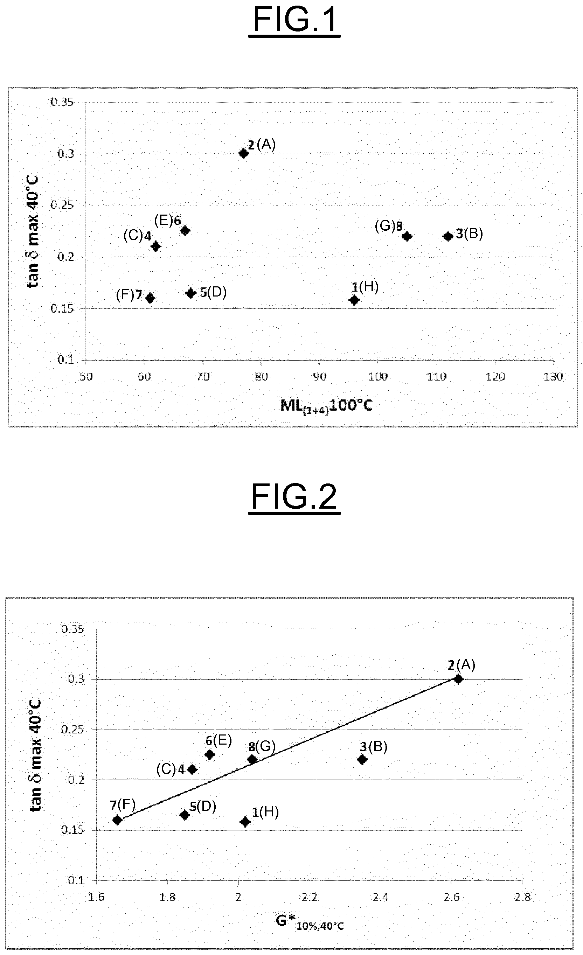

Les Figures 1 et 2 montrent les propriétés dynamiques et la viscosité Mooney de compositions comprenant différents élastomères diéniques.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par fonctionnalisation des extrémités de chaîne à au moins 70% molaire par une fonction amine, on entend selon l'invention, un taux molaire de fonctionnalisation en extrémité de chaîne d'au moins 70% par rapport au nombre de moles de bout de chaîne. En d'autres termes, après la polymérisation des monomères, au moins 70% molaire des chaînes vivantes synthétisées portent à l'extrémité non réactive de la chaîne une fonction amine issue de l'initiateur de polymérisation.

Cela signifie donc que au moins 70% molaire des extrémités de chaîne de l'élastomère diénique modifié objet de l'invention sont fonctionnalisées par une fonction amine, et que en particulier au moins 70% molaire des extrémités de chaîne de l'espèce fonctionnalisée en milieu de chaîne par un groupe silanol, dont l'atome de silicium lie les deux morceaux de la chaîne, sont fonctionnalisées par une fonction amine.

Il convient de préciser qu'il est connu de l'homme du métier que lorsqu'on modifie un élastomère par réaction d'un agent de fonctionnalisation sur l'élastomère vivant issu d'une étape de polymérisation anionique, on obtient un mélange d'espèces modifiées de cet élastomère dont la composition dépend notamment de la proportion de sites réactifs de l'agent de fonctionnalisation par rapport au nombre de chaînes vivantes. Ce mélange comprend des espèces fonctionnalisées en extrémité de chaîne, couplées, étoilées et/ou non fonctionnalisées.

Dans la présente description, on entend par "espèce couplée" ou "élastomère couplé" par un agent porteur d'une fonction silanol, l'espèce élastomérique possédant le groupement fonctionnel au sein de sa chaîne élastomère, l'atome de silicium de ce groupement liant les deux morceaux de la chaîne de l'élastomère diénique. On dit que l'élastomère est couplé ou encore fonctionnalisé en milieu de chaîne, par opposition à la position "en extrémité de chaîne" et bien que le groupement ne se situe pas précisément au milieu de la chaîne élastomère.

L'élastomère diénique modifié selon l'invention peut également contenir les autres espèces fonctionnalisées ou non par le groupe silanol. Lorsque le groupement fonctionnel se situe en un bout de chaîne, on dira alors que l'espèce est fonctionnalisée en bout ou extrémité de chaîne. L'atome de silicium de ce groupement est directement lié à la chaîne de l'élastomère diénique. Lorsque le groupement fonctionnel est central auquel n chaînes ou branches élastomères (n>2) sont liées formant une structure en étoile de l'élastomère, on dira alors que l'espèce est étoilée. L'atome de silicium de ce groupement lie les n branches de l'élastomère diénique modifié entre elles.

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids total de l'ensemble des charges de la composition. Egalement, une espèce fonctionnelle d'un élastomère diénique modifié dite majoritaire est celle représentant la plus grande fraction pondérale parmi les espèces fonctionnalisées constituant l'élastomère diénique, par rapport au poids total de l'élastomère diénique modifié. Dans un système comprenant un seul composé d'un certain type, celui-ci est majoritaire au sens de la présente invention.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Comme expliqué précédemment, l'invention a pour objet un élastomère diénique modifié comprenant majoritairement l'espèce couplée par un agent porteur d'une fonction silanol, l'atome de silicium liant les deux morceaux de la chaîne, et dont les deux extrémités de chaîne sont fonctionnalisées à au moins 70% molaire par une fonction amine.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique de la composition conforme à l'invention est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

Selon un mode de réalisation préféré, l'élastomère diénique modifié selon l'invention comprend au moins 50% en poids, plus préférentiellement au moins 70%, mieux 80 à 100% en poids, par rapport à l'élastomère diénique modifié, d'espèce fonctionnalisée en milieu de chaîne par le groupe silanol, et fonctionnalisée à au moins 70% molaire en bout de chaîne, par rapport au nombre de moles de bout de chaîne, par une fonction amine.

Selon un autre mode de réalisation, combinable au précédent, l'espèce diénique fonctionnalisée en milieu de chaîne par le groupe silanol est fonctionnalisée à 100% en bout de chaîne par une fonction amine.

Selon un mode de réalisation particulier, l'élastomère diénique modifié selon l'invention comporte un taux de fonction Si global T, qui est le rapport $N_s/N_p$, dans lequel $N_s$ représente le nombre de moles de silicium liées au polymère couplé déterminé par résonance magnétique nucléaire RMN $^1$H et exprimé en mmol/kg, $N_p$ représente le nombre de mmoles de polymère avant couplage par kilogramme de polymère, allant de 0,36 à 0,60, un taux de fonction silanol (SiOH) en milieu de chaîne T1 qui est le rapport correspondant au nombre de moles de fonctions SiOH sur le nombre de moles de Silicium (Si), déterminé par résonance magnétique nucléaire RMN 2D $^1$H-$^{29}$Si allant de 80 à 100 % et une distribution monomodale des masses moléculaires en nombre des chaînes de polymère couplées.

Le nombre $N_p$ est obtenu par le rapport $10^6$ sur masse moléculaire en nombre Mn déterminée par chromatographie d'exclusion stérique (SEC).

Le terme élastomère ou polymère monomodal signifie, en relation avec la distribution des masses moléculaires, une distribution des masses moléculaires en nombre déterminée par la technique SEC correspondant à un unique pic lors de la décomposition du chromatogramme SEC.

Selon ce mode de réalisation particulier, l'élastomère diénique modifié présente une masse moléculaire moyenne en nombre Mn déterminée par la technique SEC comprise entre 100 000 g/mol et 350 000 g/mol.

L'élastomère diénique modifié selon l'invention peut être préparé selon un procédé incluant la modification de l'élastomère par réaction d'un élastomère diénique vivant sur un agent de fonctionnalisation approprié, c'est-à-dire toute molécule au moins difonctionnelle en vue de coupler, la fonction étant tout type de groupement chimique connu par l'homme de l'art pour réagir avec un bout de chaîne vivant. Un tel procédé fait également l'objet de l'invention.

Ainsi, selon l'invention, l'élastomère diénique modifié est obtenu par la mise en oeuvre des étapes suivantes :

- polymérisation anionique d'au moins un monomère diène conjugué en présence d'un initiateur de polymérisation possédant une fonction amine,
- modification de l'élastomère diénique vivant porteur d'un site actif obtenu à l'étape précédente par un agent de fonctionnalisation, susceptible de coupler les chaînes élastomères, avec un rapport molaire de l'agent de fonctionnalisation au métal de l'initiateur de polymérisation d'une valeur allant de 0,35 et 0,65, pour obtenir, après hydrolyse, l'élastomère diénique modifié comprenant majoritairement l'espèce fonctionnalisée en milieu de chaîne par un groupe silanol dont l'atome de silicium lie les deux morceaux de la chaîne.

Les initiateurs de polymérisation à fonction amine conduisent à des chaînes vivantes ayant un groupement amine à l'extrémité non réactive de la chaine.

A titre d'initiateurs de polymérisation à fonction amine, on peut citer de manière préférée les amidures de lithium, produits de la réaction d'un composé organolithien, de préférence alkyllithien, et d'une amine secondaire acyclique ou cyclique, de préférence cyclique.

A titre d'amine secondaire utilisable pour préparer les initiateurs, on peut citer la diméthylamine, diéthylamine, dipropylamine, di-n-butylamine, di-sec-butylamine, dipentylamine, dihexylamine, di-n-octylamine, di-(2-ethylhexyl)amine, di-cyclohexylamine, N-méthylbenzylamine, diallylamine, morpholine, piperazine, 2,6-diméthylmorpholine, 2,6-diméthylpiperazine, 1-éthylpiperazine, 2-méthylpiperazine, 1-benzylpiperazine, piperidine, 3,3-diméthylpiperidine, 2,6-diméthylpiperidine, 1-méthyl-4-(méthylamino)piperidine, 2,2,6,6-tetraméthylpiperidine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine.

L'amine secondaire, lorsqu'elle est cyclique, est de préférence choisie parmi la pyrrolidine et l'hexaméthylèneamine.

Le composé alkyllithien est de préférence l'éthyllithium, le n-butyllithium (n-BuLi), l'isobutyllithium, etc.

De préférence, l'initiateur de polymérisation à fonction amine est soluble dans un solvant hydrocarboné sans utilisation d'un agent de solvatation.

L'initiateur de polymérisation à fonction amine est un produit de réaction d'un composé alkyllithien et d'une amine secondaire. En fonction du rapport molaire du composé alkyllithien à l'amine secondaire, le produit de la réaction peut comporter de l'alkyllithien résiduel. En conséquence, l'initiateur de polymérisation peut être constitué d'un mélange d'amidure de lithium et d'alkyllithien résiduel. Cet alkyllithien résiduel conduit à la formation de chaînes vivantes ne portant pas de groupement amine en extrémité de chaîne. Selon l'invention, l'initiateur de polymérisation ne contient pas plus de 30% de composé alkyllithien. Au-delà de cette valeur, les effets techniques recherchés, notamment l'amélioration du compromis de propriétés hystérétiques et de rigidité, ne sont pas satisfaisants. Selon une variante du procédé, l'initiateur de polymérisation ne contient pas de composé alkyllithien.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Selon un mode de réalisation particulier de l'invention, la première étape est effectuée en présence d'un agent polaire chélatant possédant sur au moins deux atomes au moins un doublet non liant.

L'agent polaire chélatant possédant sur au moins deux atomes au moins un doublet non liant est utilisé dans la première étape du procédé selon l'invention lorsque l'on veut obtenir l'élastomère diénique modifié comportant un taux de fonction Si global T, qui est le rapport $N_s/N_p$, dans lequel $N_s$ représente le nombre de moles de silicium liées au polymère couplé déterminé par résonance magnétique nucléaire RMN $^1$H et exprimé en mmol/kg, $N_p$ représente le nombre de mmoles de polymère avant couplage par kilogramme de polymère, allant de 0,36 à 0,60, un taux de fonction silanol (SiOH) en milieu de chaîne T1 qui est le rapport correspondant au nombre de moles de fonctions SiOH sur le nombre de moles de Silicium (Si), déterminé par résonance magnétique nucléaire RMN 2D $^1$H-$^{29}$Si allant de 80 à 100 % et une distribution monomodale des masses moléculaires en nombre des chaînes de polymère couplées.

Les demanderesses ont en effet découvert de manière surprenante que la présence d'un agent polaire particulier lors de l'étape de polymérisation a une influence sur la sélectivité de la réaction de couplage entre les chaînes polymères vivantes et l'agent de couplage de chaînes polymères. Lorsqu'un agent polaire non chélatant est utilisé, on observe la formation de diverses espèces dont notamment des étoiles à trois branches tandis que, lorsque l'on utilise un agent polaire chélatant, on constate d'une part que le taux T est élevé, c'est-à-dire allant de 0,36 à 0,60, ce qui démontre que la majorité des chaînes polymères comportant un atome de Si sont couplées, sachant que l'optimum de la réaction de couplage consiste à avoir deux chaînes polymères couplées à un atome de Si, ce qui correspond à un taux de fonction Si de 0,5, et d'autre part qu'on forme très majoritairement (taux de fonctionnalisation T1 > 80 %, c'est-à-dire allant de 80 à 100 %), des élastomères couplés possédant une fonction silanol en milieu de chaîne en raison d'une sélectivité très élevée dudit agent polaire chélatant et que la distribution des masses moléculaires en nombre des chaînes de polymère couplées est monomodale.

L'agent polaire chélatant est de préférence mis en présence du ou des monomère(s) diénique(s) et du solvant, lorsque la polymérisation est effectuée en solution, avant addition de l'initiateur de polymérisation.

A titre d'agents polaires chélatants utilisables dans le procédé conforme à l'invention conviennent notamment les agents comprenant au moins une fonction amine tertiaire ou au moins une fonction éther et préférentiellement des agents de type tétrahydrofurfuryle éthyle éther ou tétraméthyle éthylènediamine.

La polymérisation peut être effectuée en continu ou en discontinu. On effectue généralement la polymérisation à une température comprise entre 20 °C et 150 °C et de préférence voisine de 30 °C à 110 °C.

L'élastomère diénique peut avoir toute microstructure qui est fonction des conditions de polymérisation utilisées. L'élastomère peut être à blocs, statistiques, séquencés, microséquencés, etc... et être préparé en dispersion ou en solution. La microstructure de cet élastomère peut être déterminée par la présence ou non d'un agent modifiant et/ou randomisant et les quantités d'agent modifiant et/ou randomisant employées.

La deuxième étape du procédé selon l'invention consiste en la modification de l'élastomère diénique vivant, obtenu à l'issue de l'étape de polymérisation anionique, selon des conditions opératoires favorisant la réaction de couplage de l'élastomère diénique par un agent de fonctionnalisation approprié. Cette étape conduit à la synthèse d'un élastomère diénique modifié comprenant majoritairement l'espèce couplée.

La réaction de modification de l'élastomère diénique vivant, obtenu à l'issue de la première étape, peut se dérouler à une température comprise entre - 20°C et 100°C, par addition sur les chaînes polymères vivantes ou inversement d'un agent de fonctionnalisation non polymérisable susceptible de former un groupement silanol, l'atome de silicium liant deux morceaux de la chaîne élastomérique.

L'agent de fonctionnalisation peut être choisi parmi les composés de formule $RSiX_3$ dans laquelle R représente un groupe alcoyle primaire ou secondaire, cycloalcoyle, aryle ayant de 1 à 20 atomes de carbone, et X représente un atome d'halogène et de préférence le chlore ou le brome.

On peut citer à titre d'exemple le méthyltrichlorosilane.

Le rapport molaire entre l'agent de fonctionnalisation et le métal de l'initiateur des chaînes polymères vivantes varie de 0,35 à 0,65, préférentiellement de 0,40 à 0,60 et encore plus préférentiellement de 0,45 à 0,55.

Le solvant utilisé pour la réaction de couplage des chaînes polymères, de préférence, est le même que le solvant hydrocarboné inerte éventuellement utilisé pour la polymérisation, et de préférence le cyclohexane ou tout autre solvant hydrocarboné aliphatique.

Le mélangeage du polymère diénique vivant et de l'agent de fonctionnalisation peut être réalisé par tout moyen approprié. Le temps de réaction entre le polymère diénique vivant et l'agent de couplage peut être compris entre 10 secondes et 2 heures.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir notamment pour effet d'hydrolyser tout ou partie des fonctions halogénosilane hydrolysables de l'élastomère diénique modifié pour les transformer en fonctions silanol.

Selon d'autres variantes de ce procédé, ces étapes comprennent une étape spécifique d'hydrolyse dédiée à l'hydrolyse de tout ou partie des fonctions halogénosilane hydrolysables de l'élastomère diénique modifié pour les transformer en fonctions silanol. Cette étape d'hydrolyse totale ou partielle peut être mise en oeuvre de manière connue en soit par adjonction d'eau en excès par rapport aux fonctions halogénosilane.

Selon d'autres variantes encore de l'invention, on peut également prévoir un étoilage supplémentaire de l'élastomère diénique modifié selon l'invention. Cet étoilage est avantageusement mis en oeuvre afin de diminuer le fluage à cru de la matrice élastomère. Le procédé de préparation de l'élastomère diénique modifié selon l'invention peut alors, selon une mise en oeuvre, comprendre une étape formation d'espèces étoilées, généralement antérieurement à l'étape de modification. Cette étape d'étoilage peut être réalisée par réaction avec un agent d'étoilage connu en soi par exemple à base d'étain ou de silicium, ou encore avec le même agent de type $RSiX_3$ avec un rapport molaire de l'agent de fonctionnalisation à l'initiateur de polymérisation d'une valeur inférieure ou égale 0,33.

Les étapes de ces différentes variantes sont combinables en elles.

Un autre objet de l'invention est une composition de caoutchouc renforcée à base d'au moins une charge renforçante et une matrice élastomère comprenant au moins un élastomère diénique modifié tel que décrit plus haut. Il doit être entendu que la composition de caoutchouc peut comprendre un ou plusieurs de ces élastomères diéniques modifiés selon l'invention.

La composition de caoutchouc renforcée selon l'invention peut se présenter à l'état réticulé ou à l'état non réticulé, autrement dit réticulable.

L'élastomère diénique modifié selon l'invention peut être, selon différentes variantes, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques fortement insaturés constitué par les polybutadiènes (BR) les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

On notera que l'amélioration des propriétés de la composition selon l'invention sera d'autant plus élevée que la proportion du ou des élastomères différents des élastomères diéniques modifiés de l'invention dans cette composition sera réduite.

Ainsi, de préférence, la matrice élastomère comprend à titre majoritaire l'élastomère diénique modifié selon l'invention.

Lorsque l'élastomère conventionnel utilisé en coupage est du caoutchouc naturel et/ou un ou plusieurs polymères diéniques comme par exemple les polybutadiènes, les polyisoprènes, les copolymères butadiène- styrène ou butadiène-styrène-isoprène, cet élastomère ou ces élastomères, modifiés ou non, peuvent alors être présents de 1 à 70 parties en poids pour 100 parties d'élastomère diénique modifié selon l'invention.

Plus préférentiellement, la matrice élastomère est uniquement constituée de l'élastomère diénique modifié selon l'invention.

La composition de caoutchouc de l'invention comprend, outre au moins une matrice élastomère telle que décrit ci-dessus, au moins une charge renforçante.

On peut utiliser tout type de charge renforçante connue pour ses capacités à renforcer une composition de caoutchouc utilisable pour la fabrication de bandes de roulement de pneumatiques, par exemple du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère isoprénique sous la forme d'un masterbatch (voir par exemple demandes WO 97/36724 ou WO 99/16600).

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 m$^2$/g, de préférence de 30 à 400 m$^2$/g, notamment entre 60 et 300 m2/g. On citera également les charges minérales du type alumineux, en particulier de l'alumine ($Al_2O_3$) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles telles que décrites précédemment.

De manière préférentielle, le taux de charge renforçante totale (noir de carbone et/ou autre charge renforçante telle que silice) est compris entre 10 et 200 pce, plus préférentiellement entre 30 et 150 pce, et encore plus préférentiellement entre 70 et 130 pce, l'optimum étant de manière connue différent selon les applications particulières visées.

Selon une variante de l'invention, la charge renforçante est majoritairement autre que du noir de carbone, c'est-à-dire qu'elle comprend plus de 50% en poids du poids total de la charge, d'une ou de plusieurs charges autres que du noir de carbone, notamment une charge inorganique renforçante telle que la silice, voire elle est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

Selon une autre variante de l'invention, on utilise une charge renforçante comportant majoritairement du noir de carbone, et optionnellement de la silice ou une autre charge inorganique.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels.

Dans la composition selon l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone.

La composition de caoutchouc selon l'invention peut également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité de la composition, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention peut comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé de préparation d'une composition selon l'invention, comprend généralement :

(i) la réalisation, à une température maximale comprise entre 130 °C et 200 °C, d'un premier temps de travail thermomécanique des constituants de la composition comprenant l'élastomère diénique modifié selon l'invention et une charge renforçante, à l'exception d'un système de réticulation, puis

(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes de la préparation de l'élastomère diénique majoritairement couplé par un groupe silanol et lié à l'élastomère diénique par l'atome de silicium selon le procédé décrit plus haut.

L'invention a également pour objet un article semi-fini en caoutchouc pour pneumatique, comprenant une composition de caoutchouc selon l'invention, réticulable ou réticulée ou constitué d'une telle composition.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique. Un tel produit semi-fini fait également l'objet de l'invention.

En raison de l'amélioration du compromis hystérèse / mise en oeuvre à cru / rigidité qui caractérise une composition de caoutchouc renforcée selon l'invention, on notera qu'une telle composition peut constituer tout produit semi-fini du pneumatique et tout particulièrement la bande de roulement, diminuant notamment sa résistance au roulement et améliorant la résistance à l'usure.

L'invention a donc enfin pour objet un pneumatique comportant un article semi-fini selon l'invention, en particulier une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

### Exemples de préparation d'élastomères modifiés

**Préparation du polymère A** : SBR non fonctionnel - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 535 mL de n-butyllithium à 0,05 mol.L$^{-1}$ dans le méthylcyclohexane. La polymérisation est conduite à 50 °C.

Après 40 minutes, le taux de conversion des monomères atteint 90 %. Ce taux est déterminé par pesée d'un extrait séché à 140 °C, sous la pression réduite de 200 mmHg. 530 mL d'une solution de méthanol à 0,15 mol.L$^{-1}$ dans le toluène sont alors ajoutés. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 60.

La masse molaire moyenne en nombre, $M_n$, de ce copolymère, déterminée par la technique SEC, est de 192 000 g.mol$^{-1}$ et l'indice de polymolécularité, Ip, est de 1,07.

La microstructure de ce copolymère est déterminée par la méthode NIR. Le taux de motifs 1,2 est de 59 % par rapport aux unités butadiène. Le taux massique de styrène est de 25 %.

La température de transition vitreuse de ce copolymère est de - 24 °C.

**Préparation du polymère B** : SBR fonctionnel amine en extrémité de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 1,07 L d'hexaméthylèneamine lithiée à 0,05 mol.L$^{-1}$ dans le méthylcyclohexane. La polymérisation est conduite à 50 °C.

Après 32 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.L$^{-1}$ dans le toluène, est de 1,10 dL.g$^{-1}$. 268 mL d'une solution de diméthyldichlorosilane à 0,1 mol.L$^{-1}$ dans le méthylcyclohexane sont ajoutés. Après 20 minutes de réaction à 50 °C, la solution est antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,80 dL.g$^{-1}$. Le saut de viscosité, défini comme le rapport de ladite viscosité "finale" sur ladite viscosité "initiale", est ici de 1,63. La viscosité Mooney du polymère ainsi couplé est de 59.

La masse molaire moyenne en nombre, $M_n$, de ce copolymère, déterminée par la technique SEC, est de 188 000 g.mol$^{-1}$ et l'indice de polymolécularité, Ip, est de 1,09.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère C** : SBR fonctionnel silanol en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 1,07 L de n-butyllithium à 0,05 mol.L$^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.L$^{-1}$ dans le toluène, est de 1,10 dL.g$^{-1}$. 268 mL d'une solution de méthyltrichlorosilane à 0,1 mol.L$^{-1}$ dans le méthylcyclohexane sont ajoutés. Après 20 minutes de réaction à 0 °C, un excès d'eau est ajouté pour hydrolyser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,80 dL.g$^{-1}$. Le saut de viscosité, défini comme le rapport de ladite viscosité "finale" sur ladite viscosité "initiale", est ici de 1,64. La viscosité Mooney du polymère ainsi couplé est de 60.

La masse molaire moyenne en nombre, $M_n$, de ce copolymère, déterminée par la technique SEC, est de 190 000 g.mol$^{-1}$ et l'indice de polymolécularité, Ip, est de 1,10.

Le pourcentage massique d'espèces couplées, déterminé par la technique de SEC haute résolution, est de 82 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère D** : SBR fonctionnel aminoalcoxysilane en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 1,07 L de n-butyllithium à 0,05 mol.L$^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.dL$^{-1}$ dans le toluène, est de 1,11 dL.g$^{-1}$. 268 mL d'une solution de 3-(N,N-diméthylaminopropyl)triméthoxysilane à 0,1 mol.L$^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,78 dL.g$^{-1}$. Le saut de viscosité, défini comme le rapport de ladite viscosité "finale" sur ladite viscosité "initiale", est ici de 1,60. La viscosité Mooney du polymère ainsi couplé est de 59.

La masse molaire moyenne en nombre, $M_n$, de ce copolymère, déterminée par la technique SEC, est de 187 000 g.mol$^{-1}$ et l'indice de polymolécularité, Ip, est de 1,13.

Le pourcentage massique d'espèces couplées, déterminé par la technique de SEC haute résolution, est de 85 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère E** : SBR fonctionnel époxyde + alcoxysilane en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 1,07 L de n-butyllithium à 0,05 mol.L$^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.dL$^{-1}$ dans le toluène, est de 1,10 dL.g$^{-1}$. 268 mL d'une solution de 3-(glycidyloxypropyl)triméthoxysilane à 0,1 mol.L$^{-1}$ dans le méthylcyclohexane sont ajoutés. Après 20 minutes de réaction à 50 °C, la solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,77 dL.g$^{-1}$. Le saut de viscosité, défini comme le rapport de ladite viscosité "finale" sur ladite viscosité "initiale", est ici de 1,61. La viscosité Mooney du polymère ainsi couplé est de 58.

La masse molaire moyenne en nombre, $M_n$, de ce copolymère, déterminée par la technique SEC, est de 186 000 g.mol$^{-1}$ et l'indice de polymolécularité, Ip, est de 1,14.

Le pourcentage massique d'espèces couplées, déterminé par la technique de SEC haute résolution, est de 86 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère F** : SBR fonctionnel silanol + polyéther en milieu de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 1,07 L de n-butyllithium à 0,05 mol.L$^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.dL$^{-1}$ dans le toluène, est de 1,10 dL.g$^{-1}$. 268 mL d'une solution de poly(oxy-1,2-ethanediyl), α-β-(dichloromethylsilyl)propyl]-ω-[3-(dichloromethylsilyl)propoxy] à 0,1 mol.L$^{-1}$ dans le diéthyl éther sont ajoutés. Après 90 minutes de réaction à 50 °C, un excès d'eau est ajouté afin de neutraliser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,76 dL.g$^{-1}$. Le saut de viscosité, défini comme le rapport de ladite viscosité "finale" sur ladite viscosité "initiale", est ici de 1,60. La viscosité Mooney du polymère ainsi couplé est de 59.

La masse molaire moyenne en nombre, $M_n$, de ce copolymère, déterminée par la technique SEC, est de 186 000 g.mol$^{-1}$ et l'indice de polymolécularité, Ip, est de 1,15.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Préparation du polymère G :** SBR fonctionnel silanol en extrémité de chaîne - témoin

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 535 mL de n-butyllithium à 0,05 mol.L$^{-1}$ dans le méthylcyclohexane. La polymérisation est conduite à 50 °C.

Après 40 minutes, le taux de conversion des monomères atteint 90 %. Ce taux est déterminé par pesée d'un extrait séché à 140 °C, sous la pression réduite de 200 mmHg. 134 mL d'une solution d'hexaméthylcyclotrisiloxane à 0,1 mol.L$^{-1}$ dans le méthylcyclohexane sont alors ajoutés. Après 30 minutes à 60 °C, 535 mL d'une solution de méthanol dans le toluène à 0,15 mol.L$^{-1}$ sont alors ajoutés. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 59.

La masse molaire moyenne en nombre, $M_n$, de ce copolymère, déterminée par la technique SEC, est de 190 000 g.mol$^{-1}$ et l'indice de polymolécularité, Ip, est de 1,05

La microstructure de ce copolymère est déterminée par la méthode NIR. Le taux de motifs 1,2 est de 59 % par rapport aux unités butadiène. Le taux massique de styrène est de 25 %.

La température de transition vitreuse de ce copolymère est de - 24 °C.

**Préparation du polymère H :** SBR fonctionnel amine en extrémité de chaîne et fonctionnel silanol en milieu de chaîne selon l'invention

Dans un réacteur de 90 litres, maintenu sous une pression d'azote d'environ 2 bars, contenant 44,7 kg de méthylcyclohexane, sont injectés 1,8 kg de styrène et 4,9 kg de butadiène ainsi que 395 mL d'une solution de tetrahydrofurfuryl ether à 0,1 mol.L$^{-1}$ dans le méthylcyclohexane. Après neutralisation des impuretés dans la solution à polymériser par addition de n-butyllithium, sont ajoutés 1,07 L d'hexaméthylèneamine lithiée à 0,05 mol.L$^{-1}$ dans le méthylcyclohexane. La polymérisation est conduite à 50 °C.

Après 30 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 g.L$^{-1}$ dans le toluène, est de 1,09 dL.g$^{-1}$. 268 mL d'une solution de méthyltrichlorosilane à 0,1 mol.L$^{-1}$ dans le méthylcyclohexane sont ajoutés. Après 20 minutes de réaction à 0 °C, un excès d'eau est ajouté pour hydrolyser les fonctions SiCl présentes sur les chaînes polymère. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,78 dL.g$^{-1}$. Le saut de viscosité, défini comme le rapport de ladite viscosité "finale" sur ladite viscosité "initiale", est ici de 1,63. La viscosité Mooney du polymère ainsi couplé est de 59.

La masse molaire moyenne en nombre, $M_n$, de ce copolymère, déterminée par la technique SEC, est de 187

000 g.mol$^{-1}$ et l'indice de polymolécularité, Ip, est de 1,12.

Le pourcentage massique d'espèces couplées, déterminé par la technique de SEC haute résolution, est de 84 %.

La microstructure de ce copolymère est déterminée par la méthode NIR. Le taux de motifs 1,2 est de 60 % par rapport aux unités butadiène. Le taux massique de styrène est de 25 %.

La température de transition vitreuse de ce copolymère est de - 24 °C.

**Mesures et tests utilisés**

Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L$^{-1}$. Puis la solution est filtrée sur filtre de porosité 0,45 $\mu$m avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triethylamine, le débit de 1 mL.min$^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

Chromatographie d'exclusion stérique haute résolution

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 g.L$^{-1}$. Puis la solution est filtrée sur filtre de porosité 0,45 $\mu$m avant injection.

L'appareillage utilisé est une chaîne chromatographique "WATERS alliance 2695". Le solvant d'élution est le tétrahydrofurane, le débit de 0,2 ml.min$^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

Viscosité Mooney

Pour les polymères et les compositions de caoutchouc, les viscosités Mooney ML$_{(1+4)}$100 °C sont mesurées selon la norme ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML$_{(1+4)}$ est exprimée en "unité Mooney" (UM, avec 1 UM = 0,83 N.m).

Calorimétrie différentielle

Les températures de transition vitreuse (Tg) des élastomères sont déterminées à l'aide d'un calorimètre différentiel ("differential scanning calorimeter").

Spectroscopie proche infrarouge (NIR)

La microstructure des élastomères est caractérisée par la technique de spectroscopie proche infrarouge (NIR).
La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN [13]C. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 cm$^{-1}$ avec une résolution de 2 cm$^{-1}$, à l'aide d'un spectromètre proche infrarouge à transformée de Fourier Bruker Tensor 37 équipé d'un détecteur InGaAs refroidi par effet Peltier.

Résonance magnétique nucléaire (RMN)

La RMN $^1$H permet de quantifier les groupements méthyl portés par le silicium (SiCH$_3$) par intégration du signal correspondant, situé autour de $\delta$ = 0 ppm. Les échantillons sont solubilisés dans le sulfure de carbone (CS$_2$). 100 $\mu$L de cyclohexane deutéré (C$_6$D$_{12}$) sont ajoutés pour le signal de lock. Les analyses RMN sont réalisées sur un spectromètre 500 MHz BRUKER équipé d'une sonde "large bande" BBIz 5 mm. Pour l'expérience RMN $^1$H quantitative, la séquence utilise une impulsion 30° et un délai de répétition de 2 secondes.
La RMN 2D $^1$H-$^{29}$Si permet de vérifier la nature de la fonction grâce aux valeurs de déplacements chimiques des noyaux silicium et des protons au voisinage [2]J (via 2 liaisons). Elle utilise une valeur de constante de couplage $^2J_{1H-29Si}$ de 8 Hz. Le déplacement chimique du silicium du produit CH$_3$Si(SBR)$_2$OH en milieu de chaîne est d'environ 8 ppm, celui de la forme SBR(CH$_3$)$_2$SiOH en bout de chaîne autour de 11-12 ppm.

Viscosité inhérente

La viscosité inhérente des élastomères à 25 °C est déterminée à partir d'une solution d'élastomère à 0,1 g.dL$^{-1}$ dans le toluène, selon le principe suivant :

La viscosité inhérente est déterminée par la mesure du temps d'écoulement t de la solution de polymère et du temps d'écoulement $t_0$ du toluène, dans un tube capillaire.

Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 g.dL$^{-1}$ sont mesurés.
La viscosité inhérente est obtenue par la relation suivante :

$$\eta_{inh} = \frac{1}{C} \ln\left[\frac{(t)}{(t_o)}\right]$$

avec :

C : concentration de la solution de polymère dans le toluène en g.dL$^{-1}$,
$t$ : temps d'écoulement de la solution de polymère dans le toluène en seconde,
$t_0$ : temps d'écoulement du toluène en seconde,
$\eta_{inh}$ : viscosité inhérente exprimée en dL.g$^{-1}$.

Propriétés dynamiques

Les propriétés dynamiques G* et tan $\delta$ max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (40°C) selon la norme ASTM D 1349-99. On effectue un balayage en amplitude de déformation de 0,1% à 50% crête-crête (cycle aller), puis de 50% à 0,1% crête-crête (cycle retour). Les résultats exploités sont le module complexe de cisaillement dynamique (G*) et le facteur de perte tan $\delta$. Pour le cycle retour, on indique la valeur maximale de tan $\delta$ observée, noté tan $\delta$ max. Cette valeur est représentative de l'hystérèse du matériau et dans le cas présent de la résistance au roulement : plus la valeur de tan $\delta$ max est faible, plus la résistance au roulement est basse. Les valeurs de G* mesurées à 40°C sont représentatives de la rigidité, c'est-à-dire de la résistance à la déformation: plus la valeur de G* est élevée plus la rigidité du matériau est importante, et donc la résistance à l'usure élevée.

**Exemples comparatifs de compositions de caoutchouc**

On compare huit compositions reportées dans le Tableau 1 ci-après. Sept d'entre elles (compositions 2 à 8) sont non-conformes vis-à-vis de la composition préconisée par l'invention :

**TABLEAU 1**

| | Exemple | Exemples comparatifs | | | | | | |
|---|---|---|---|---|---|---|---|---|
| | 1 | 2 | 3 | 4 | 5 | 6 | 7 | 8 |
| Polymère A | | 100 | | | | | | |
| Polymère B | | | 100 | | | | | |
| Polymère C | | | | 100 | | | | |
| Polymère D | | | | | 100 | | | |
| Polymère E | | | | | | 100 | | |
| Polymère F | | | | | | | 100 | |
| Polymère G | | | | | | | | 100 |
| Polymère H | 100 | | | | | | | |
| Silice (1) | 80 | 80 | 80 | 80 | 80 | 80 | 80 | 80 |
| N234 | 1 | 1 | 1 | 1 | 1 | 1 | 1 | 1 |
| Huile MES (2) | 15 | 15 | 15 | 15 | 15 | 15 | 15 | 15 |
| Résine (3) | 15 | 15 | 15 | 15 | 15 | 15 | 15 | 15 |
| Agent de couplage (4) | 6,4 | 6,4 | 6,4 | 6,4 | 6,4 | 6,4 | 6,4 | 6,4 |
| ZnO | 2,5 | 2,5 | 2,5 | 2,5 | 2,5 | 2,5 | 2,5 | 2,5 |
| Acide stéarique | 2 | 2 | 2 | 2 | 2 | 2 | 2 | 2 |
| Antioxydant (5) | 1,9 | 1,9 | 1,9 | 1,9 | 1,9 | 1,9 | 1,9 | 1,9 |
| Cire anti-ozone "C32ST" (6) | 1,5 | 1,5 | 1,5 | 1,5 | 1,5 | 1,5 | 1,5 | 1,5 |
| Diphénylguanidine | 1,5 | 1,5 | 1,5 | 1,5 | 1,5 | 1,5 | 1,5 | 1,5 |
| Soufre | 1,2 | 1,2 | 1,2 | 1,2 | 1,2 | 1,2 | 1,2 | 1,2 |
| Sulfénamide (7) | 2 | 2 | 2 | 2 | 2 | 2 | 2 | 2 |
| (1) Silice "Zeosil 1165MP" de Rhodia.<br>(2) Catenex® SBR de Shell.<br>(3) Polylimonène.<br>(4) "Si69" de Degussa.<br>(5) N-(1,3-dimethylbutyl)-N'-phenyl-p-phenylenediamine.<br>(6) Anti-ozone de Repsol.<br>(7) N-cyclohexyl-2-benzothiazylsulphenamide. | | | | | | | | |

Pour les essais qui suivent, on procède de la manière suivante :

Chacune des compositions est réalisée, dans un premier temps, par un travail thermo-mécanique, puis, dans un second temps de finition, par un travail mécanique.

On introduit dans un mélangeur interne de laboratoire de type « Banbury », dont la capacité est de 400 cm$^3$, qui est rempli à 72% et dont la température initiale est de 90°C, l'élastomère, deux tiers de la silice, l'agent de couplage, la diphénylguanidine et le noir de carbone.

Le travail thermo-mécanique est réalisé au moyen de palettes dont la vitesse moyenne est de 50 tr/min et dont la température est de 90°C.

Après une minute, on introduit le dernier tiers de silice, l'antioxydant, l'acide stéarique et la cire anti-ozone, l'huile MES et la résine, toujours sous travail thermo-mécanique.

Après deux minutes, on introduit l'oxyde de zinc, la vitesse des palettes étant de 50 tr/min.

Le travail thermo-mécanique est encore conduit pendant deux minutes, jusqu'à une température maximale de tombée de 160°C environ.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont présentés dans le Tableau 2 et sur les Figures 1 et 2.

**TABLEAU 2**

| Résultats caoutchouterie (tan $\delta$ max 40°C, G*$_{10\%,40°C}$, ML$_{(1+4)}$100°C) : | | | | | | | | |
|---|---|---|---|---|---|---|---|---|
| | Exemple | Exemples comparatifs | | | | | | |
| | 1 | 2 | 3 | 4 | 5 | 6 | 7 | 8 |
| Tan $\delta$ max 40°C | 0,158 | 0,3 | 0,22 | 0,21 | 0,165 | 0,225 | 0,16 | 0,22 |
| G*$_{10\%,40°C}$ | 2,02 | 2,62 | 2,35 | 1,87 | 1,85 | 1,92 | 1,66 | 2,04 |
| ML$_{(1+4)}$ 100°C | 96 | 77 | 112 | 62 | 68 | 67 | 61 | 105 |

La Figure 1 montre que la composition 1 contenant le SBR fonctionnel amine en extrémité de chaîne et fonctionnel silanol en milieu de chaîne H présente une valeur de tan $\delta$ max 40°C inférieure à la composition 2 comprenant le polymère témoin A (non fonctionnel), à la composition 3 comprenant le polymère témoin B (fonctionnel amine en extrémité de chaîne) et aux compositions 4-5-6-7-8 comprenant respectivement les polymères témoin C (fonctionnel silanol en milieu de chaîne), D (fonctionnel aminoalcoxysilane en milieu de chaîne), E (fonctionnel époxyde + alcoxysilane en milieu de chaîne), F (fonctionnel silanol + polyéther en milieu de chaîne), G (fonctionnel silanol en extrémité de chaîne). Cela traduit une hystérèse améliorée.

La mise en oeuvre de la composition 1 reste néanmoins tout à fait acceptable notamment au vue de la composition A qui contient un élastomère non fonctionnel habituellement utilisé dans les formulations pour semi-finis destinés à la réalisation de pneumatiques.

La Figure 2 montre que la composition 1 présente un compromis tan $\delta$ max 40 °C / G*$_{10\%,40°C}$ décalé par rapport aux autres compositions, et en particulier par rapport à la composition 4 contenant le polymère C témoin (fonctionnel silanol en milieu de chaîne). Cela traduit un compromis rigidité / hystérèse amélioré pour la composition 1 contenant le polymère modifié selon l'invention.

**Revendications**

1.  Elastomère diénique modifié comprenant majoritairement l'espèce fonctionnalisée en milieu de chaîne par un groupe silanol dont l'atome de silicium lie les deux morceaux de la chaîne, les extrémités de chaîne de l'élastomère diénique modifié étant fonctionnalisées à au moins 70% molaire par rapport au nombre de moles de bout de chaîne, par une fonction amine.

**2.** Elastomère diénique modifié selon la revendication 1, **caractérisé en ce qu'**il comprend au moins 70% en poids, par rapport à l'élastomère diénique modifié, de l'espèce fonctionnalisée en milieu de chaîne par le groupe silanol dont l'atome de silicium lie les deux morceaux de la chaîne, les extrémités de chaîne étant fonctionnalisées à au moins 70% molaire par rapport au nombre de moles de bout de chaîne, par une fonction amine.

**3.** Elastomère diénique modifié selon la revendication 1 ou 2, **caractérisé en ce qu'**il comporte un taux de fonction Si global T, qui est le rapport $N_s/N_p$, dans lequel $N_s$ représente le nombre de moles de silicium liées au polymère couplé déterminé par résonance magnétique nucléaire RMN $^1$H et exprimé en mmol/kg, $N_p$ représente le nombre de mmoles de polymère avant couplage par kilogramme de polymère, allant de 0,36 à 0,60, un taux de fonction silanol (SiOH) en milieu de chaîne T1 qui est le rapport correspondant au nombre de moles de fonctions SiOH sur le nombre de moles de Silicium (Si), déterminé par résonance magnétique nucléaire RMN 2D $^1$H-$^{29}$Si allant de 80 à 100 % et une distribution monomodale des masses moléculaires en nombre des chaînes de polymère couplées.

**4.** Elastomère diénique modifié selon l'une quelconque des revendications 1 à 3, **caractérisé en ce que** l'élastomère diénique modifié est un copolymère de butadiène et d'un monomère vinylaromatique, notamment un SBR.

**5.** Procédé de préparation d'un élastomère diénique modifié tel que défini dans l'une quelconque des revendications 1 à 4, **caractérisé en ce qu'**il comprend les étapes suivantes :

  - (1) polymérisation anionique d'au moins un monomère diène conjugué en présence d'un initiateur de polymérisation possédant une fonction amine,
  - (2) modification de l'élastomère diénique vivant porteur d'un site actif obtenu à l'étape précédente par un agent de fonctionnalisation, susceptible de coupler les chaînes élastomères, avec un rapport molaire de l'agent de fonctionnalisation au métal de l'initiateur de polymérisation d'une valeur allant de 0,35 à 0,65, pour obtenir, après hydrolyse, l'élastomère diénique modifié comprenant majoritairement l'espèce fonctionnalisée en milieu de chaîne par un groupe silanol dont l'atome de silicium lie les deux morceaux de la chaîne.

**6.** Procédé de préparation selon la revendication 5, **caractérisé en ce que** la première étape est effectuée en présence d'un agent polaire chélatant possédant sur au moins deux atomes au moins un doublet non liant.

**7.** Procédé selon la revendication 5 ou 6, **caractérisé en ce que** l'initiateur de polymérisation à fonction amine est choisi parmi les amidures de lithium obtenus à partir d'une amine secondaire, de préférence cyclique et d'un composé organolithien.

**8.** Procédé selon la revendication 6 ou 7, **caractérisé en ce que** l'agent polaire chélatant est choisi dans le groupe constitué par les agents comprenant au moins une fonction amine tertiaire ou au moins une fonction éther.

**9.** Procédé selon l'une quelconque des revendications 5 à 8, **caractérisé en ce que** l'agent de fonctionnalisation de chaînes polymères répond à la formule $RSiX_3$ dans laquelle R représente un groupe alcoyle primaire ou secondaire, cycloalcoyle, aryle ayant de 1 à 20 atomes de carbone, et X représente un atome d'halogène et de préférence le chlore ou le brome.

**10.** Procédé selon l'une quelconque des revendications 5 à 9, **caractérisé en ce que** le rapport molaire entre l'agent de fonctionnalisation et le métal de l'initiateur varie de 0,45 à 0,55.

**11.** Composition de caoutchouc renforcée à base d'au moins une charge renforçante et une matrice élastomère comprenant au moins un élastomère diénique modifié tel que défini dans l'une quelconque des revendications 1 à 4.

**12.** Composition de caoutchouc selon la revendication 11, **caractérisée en ce que** la matrice élastomère comprend à titre majoritaire l'élastomère diénique modifié tel que défini dans l'une quelconque des revendications 1 à 4.

**13.** Composition de caoutchouc selon l'une des revendications 11 à 12, **caractérisée en ce que** ladite charge renforçante comprend une charge inorganique renforçante de type siliceuse selon une fraction massique supérieure à 50 % et allant jusqu'à 100 %.

**14.** Article semi-fini en caoutchouc pour pneumatique, **caractérisé en ce qu'**il comprend une composition de caoutchouc réticulable ou réticulée telle que définie à l'une quelconque des revendications 11 à 13.

**15.** Pneumatique, **caractérisé en ce qu'**il comporte un article semi-fini tel que défini dans la revendication 14.

**Patentansprüche**

**1.** Modifiziertes Dienelastomer, umfassend hauptsächlich die in der Kettenmitte durch eine Silanolgruppe, deren Siliciumatom an zwei Stücke der Kette bindet, funktionalisierte Spezies, wobei die Kettenenden des modifizierten Dienelastomers zu mindestens 70 Mol-%, bezogen auf die Zahl der Mole Kettenende, durch eine Aminfunktion funktionalisiert sind.

**2.** Modifiziertes Dienelastomer nach Anspruch 1, **dadurch gekennzeichnet, dass** es mindestens 70 Gew.-%, bezogen auf das modifizierte Dienelastomer, der in der Kettenmitte durch die Silanolgruppe, deren Siliciumatom an zwei Stücke der Kette bindet, funktionalisierten Spezies umfasst, wobei die Kettenenden zu mindestens 70 Mol-%, bezogen auf die Zahl der Mole Kettenende, durch eine Aminfunktion funktionalisiert sind.

**3.** Modifiziertes Dienelastomer nach Anspruch 1 oder 2, **dadurch gekennzeichnet, dass** es einen Gesamtgehalt an Si-Funktion T, bei dem es sich um das Verhältnis $N_s/N_p$ handelt, wobei $N_s$ für die durch $^1$H-NMR-Kernspinresonanz bestimmte und in mmol/kg ausgedrückte Zahl der Mole Silicium, die an das gekoppelte Polymer gebunden sind, steht und $N_p$ für die Zahl der mMole Polymer vor der Kopplung pro Kilogramm Polymer steht, im Bereich von 0,36 bis 0,60, einen Gehalt an Silanolfunktion (SiOH) in der Kettenmitte T1, bei dem es sich um das durch $^1$H-$^{29}$Si-2D-NMR-Kernspinresonanz bestimmte Verhältnis handelt, das der Zahl der Mole SiOH-Funktionen zur Zahl der Mole Silicium (Si) entspricht, im Bereich von 80 bis 100% und eine monomodale Verteilung der zahlenmittleren Molmassen der gekoppelten Polymerketten aufweist.

**4.** Modifiziertes Dienelastomer nach einem der Ansprüche 1 bis 3, **dadurch gekennzeichnet, dass** es sich bei dem modifizierten Dienelastomer um ein Copolymer von Butadien und einem vinylaromatischen Monomer, insbesondere einen SBR, handelt.

**5.** Verfahren zur Herstellung eines modifizierten Dienelastomers gemäß einem der Ansprüche 1 bis 4, **dadurch gekennzeichnet, dass** es die folgenden Schritte umfasst:

- (1) anionische Polymerisation mindestens eines konjugierten Dienmonomers in Gegenwart eines Polymerisationsinitiators, der eine Aminfunktion aufweist,
- (2) Modifizierung des im vorhergehenden Schritt erhaltenen lebenden Dienelastomers, das ein aktives Zentrum trägt, mit einem zur Kopplung der Elastomerketten befähigten Funktionalisierungsmittel mit einem Molverhältnis von Funktionalisierungsmittel zu Metall des Polymerisationsinitiators im Bereich von 0,35 bis 0,65 zum Erhalt des modifizierten Dienelastomers, das hauptsächlich die in der Kettenmitte durch eine Silanolgruppe, deren Siliciumatom an zwei Stücke der Kette bindet, funktionalisierte Spezies umfasst, nach Hydrolyse.

**6.** Herstellungsverfahren nach Anspruch 5, **dadurch gekennzeichnet, dass** der erste Schritt in Gegenwart eines polaren Chelatbildners, der an mindestens zwei Atomen mindestens ein nichtbindendes Elektronenpaar aufweist, durchgeführt wird.

**7.** Verfahren nach Anspruch 5 oder 6, **dadurch gekennzeichnet, dass** der Polymerisationsinitiator mit einer Aminfunktion aus Lithiumamiden, die aus einem sekundären Amin, vorzugsweise einem cyclischen sekundären Amin, und einer Organolithiumverbindung erhalten werden, ausgewählt wird.

**8.** Verfahren nach Anspruch 6 oder 7, **dadurch gekennzeichnet, dass** der polare Chelatbildner aus der Gruppe bestehend aus Agentien mit mindestens einer tertiären Aminfunktion oder mindestens einer Etherfunktion ausgewählt wird.

**9.** Verfahren nach einem der Ansprüche 5 bis 8, **dadurch gekennzeichnet, dass** das Polymerketten-Funktionalisierungsmittel der Formel $RSiX_3$ entspricht, wobei R für eine primäre oder sekundäre Alkyl-, Cycloalkyl- oder Arylgruppe mit 1 bis 20 Kohlenstoffatomen steht und X für ein Halogenatom und vorzugsweise Chlor oder Brom steht.

**10.** Verfahren nach einem der Ansprüche 5 bis 9, **dadurch gekennzeichnet, dass** das Molverhältnis zwischen dem Funktionalisierungsmittel und dem Metall des Initiators von 0,45 bis 0,55 variiert.

**11.** Verstärkte Kautschukzusammensetzung auf Basis von mindestens einem verstärkenden Füllstoff und einer Elastomermatrix, die mindestens ein modifiziertes Dienelastomer gemäß einem der Ansprüche 1 bis 4 umfasst.

**12.** Kautschukzusammensetzung nach Anspruch 11, **dadurch gekennzeichnet, dass** die Elastomermatrix hauptsächlich das modifizierte Dienelastomer gemäß einem der Ansprüche 1 bis 4 umfasst.

**13.** Kautschukzusammensetzung nach einem der Ansprüche 11 bis 12, **dadurch gekennzeichnet, dass** der verstärkende Füllstoff einen verstärkenden anorganischen Füllstoff vom siliciumhaltigen Typ gemäß einem Massenanteil von mehr als 50% und bis zu 100% umfasst.

**14.** Kautschukhalbzeug für Reifen, **dadurch gekennzeichnet, dass** es eine vernetzbare oder vernetzte Kautschukzusammensetzung gemäß einem der Ansprüche 11 bis 13 umfasst.

**15.** Reifen, **dadurch gekennzeichnet, dass** er ein Halbzeug gemäß Anspruch 14 umfasst.

**Claims**

**1.** Modified diene elastomer comprising predominantly the entity functionalized in the middle of the chain by a silanol group, the silicon atom of which bonds the two pieces of the chain, the chain ends of the modified diene elastomer being functionalized to at least 70 mol%, with respect to the number of moles of chain end, by an amine functional group.

**2.** Modified diene elastomer according to Claim 1, **characterized in that** it comprises at least 70% by weight, with respect to the modified diene elastomer, of the entity functionalized in the middle of the chain by the silanol group, the silicon atom of which bonds the two pieces of the chain, the chain ends being functionalized to at least 70 mol%, with respect to the number of moles of chain end, by an amine functional group.

**3.** Modified diene elastomer according to Claim 1 or 2, **characterized in that** it comprises an overall content of Si functional group T, which is the ratio $N_s/N_p$, in which $N_s$ represents the number of moles of silicon bonded to the coupled polymer, determined by $^1$H nuclear magnetic resonance NMR and expressed in mmol/kg, and $N_p$ represents the number of mmoles of polymer before coupling per kilogram of polymer, ranging from 0.36 to 0.60, a content of silanol (SiOH) functional group in the middle of the chain T1 which is the ratio corresponding to the number of moles of SiOH functional groups to the number of moles of silicon (Si), determined by $^1$H-$^{29}$Si 2D nuclear magnetic resonance NMR, ranging from 80 to 100% and a monomodal distribution of the number-average molecular weights of the coupled polymer chains.

**4.** Modified diene elastomer according to any one of Claims 1 to 3, **characterized in that** the modified diene elastomer is a copolymer of butadiene and of a vinylaromatic monomer, in particular an SBR.

**5.** Process for the preparation of a modified diene elastomer as defined in any one of Claims 1 to 4, **characterized in that** it comprises the following stages:

- (1) anionic polymerization of at least one conjugated diene monomer in the presence of a polymerization initiator having an amine functional group,
- (2) modification of the living diene elastomer bearing an active site obtained in the preceding stage by a functionalization agent, capable of coupling the elastomer chains, with a molar ratio of the functionalization agent to the metal of the polymerization initiator with a value ranging from 0.35 to 0.65, in order to obtain, after hydrolysis, the modified diene elastomer comprising predominantly the entity functionalized in the middle of the chain by a silanol group, the silicon atom of which bonds the two pieces of the chain.

**6.** Preparation process according to Claim 5, **characterized in that** the first stage is carried out in the presence of a chelating polar agent having, on at least two atoms, at least one nonbonding electron pair.

**7.** Process according to Claim 5 or 6, **characterized in that** the polymerization initiator comprising an amine functional group is chosen from lithium amides obtained from a secondary amine, preferably a cyclic secondary amine, and from an organolithium compound.

8. Process according to Claim 6 or 7, **characterized in that** the chelating polar agent is selected from the group consisting of the agents comprising at least one tertiary amine functional group or at least one ether functional group.

9. Process according to any one of Claims 5 to 8, **characterized in that** the functionalization agent for polymer chains corresponds to the formula $RSiX_3$, in which R represents a primary or secondary alkyl, cycloalkyl, or aryl group having from 1 to 20 carbon atoms and X represents a halogen atom and preferably chlorine or bromine.

10. Process according to any one of Claims 5 to 9, **characterized in that** the molar ratio of the functionalization agent to the metal of the initiator varies from 0.45 to 0.55.

11. Reinforced rubber composition based on at least one reinforcing filler and an elastomer matrix comprising at least one modified diene elastomer as defined in any one of Claims 1 to 4.

12. Rubber composition according to Claim 11, **characterized in that** the elastomer matrix predominantly comprises the modified diene elastomer as defined in any one of Claims 1 to 4.

13. Rubber composition according to either of Claims 11 and 12, **characterized in that** said reinforcing filler comprises a reinforcing inorganic filler of siliceous type according to a fraction by weight of greater than 50% and ranging up to 100%.

14. Semi-finished article made of rubber for a tyre, **characterized in that** it comprises a crosslinkable or crosslinked rubber composition as defined in any one of Claims 11 to 13.

15. Tyre, **characterized in that** it comprises a semi-finished article as defined in Claim 14.

# FIG.1

# FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2951178 B1
- FR 2915202 B1
- EP 778311 B1
- WO 2009077837 A1
- WO 9736724 A
- WO 9916600 A
- US 6610261 B
- US 6747087 B
- WO 9637547 A
- WO 9928380 A
- WO 2006069792 A
- WO 2006069793 A
- WO 2008003434 A
- WO 2008003435 A
- WO 0210269 A

**Littérature non-brevet citée dans la description**

- **VILMIN, F. ; DUSSAP, C. ; COSTE, N.** *Applied Spectroscopy,* 2006, vol. 60, 619-29